# DEMANDE DE BREVET EUROPEEN

(11) **EP 4 611 270 A1**
(43) Date de publication de la demande: **03.09.2025**
(21) Numéro de dépôt: 24315073.7
(22) Date de dépôt: 29.02.2024
(51) Int. Cl.: H04B 3/54, H04B 3/56

(54) **SYSTEME DE DISTRIBUTION D'AU MOINS UN PREMIER SIGNAL ELECTRIQUE DIT PRIMAIRE ET D'UN DEUXIEME SIGNAL ELECTRIQUE DIT SECONDAIRE DANS UNE INFRASTRUCTURE DE DISTRIBUTION ELECTRIQUE COMMUNE**

(71) Demandeur: HAGER-ELECTRO SAS, 67210 Obernai (FR)
(72) Inventeur: Hausmann, Etienne, 67120 DUTTLENHEIM (FR); Poinsignon, Jean-Marc, 57220 FOULIGNY (FR)
(74) Mandataire: Ipsilon Strasbourg

(57) **Abrégé**

L'invention concerne un système de distribution d'un premier signal électrique (S1) et d'un deuxième signal électrique (S2) dans une infrastructure de distribution électrique (1) commune, comprenant une infrastructure de distribution électrique (1) configurée pour permettre au moins la propagation d'au moins un premier signal électrique (S1) et d'un deuxième signal électrique (S2), et étant destinée à être raccordée à un réseau électrique primaire (R) pour injecter le premier signal électrique (S1) dans ladite infrastructure de distribution électrique (1) et étant destinée à être raccordée à une installation électrique (I), un dispositif générateur de signal secondaire (2) configuré pour générer ledit deuxième signal électrique (S2), caractérisé en ce que ladite infrastructure de distribution électrique (1) comprend un premier dispositif d'impédance de blocage du premier signal électrique (3) configuré pour permettre le blocage de la propagation du premier signal électrique (S1) et un deuxième dispositif d'impédance de blocage du premier signal électrique et/ou du deuxième signal électrique (4) configuré pour permettre le blocage de la propagation du premier signal électrique (S1) et/ou du deuxième signal électrique (S2).

## Description

L'invention concerne le domaine des systèmes de distribution d'au moins un premier signal électrique dit primaire et d'un deuxième signal électrique dit secondaire dans une infrastructure de distribution électrique commune.

Dans le domaine de la distribution électrique, l'on connaît des tableaux électriques de distribution électrique qui sont agencés pour distribuer d'une part de la puissance et d'autre part des données de communication.

Pour ce faire, des systèmes dissociés sont le plus souvent utilisés comme par exemple respectivement d'une part un ensemble d'appareillages électriques de protection modulaires et d'autre part par exemple un coffret de communication dit VDI (Voix Données Images).

Il est de manière alternative connu d'utiliser des moyens de mutualiser les supports de transport de l'électricité, soit pour transporter des signaux de communication de données sur une ligne électrique initialement prévue pour transporter un signal de puissance, par exemple dans le cadre de la technologie dite PLC (Power Line Communication), soit pour transporter un signal de puissance sur une ligne initialement prévue pour transporter des signaux de communication de données, par exemple dans le cadre de la technologie POE (Power over Ethernet).

Toutefois, les solutions existantes présentent certains inconvénients. Notamment, les signaux de communication et les signaux de puissance se propagent tous sur l'ensemble des lignes électriques de l'installation sans distinction, ce qui n'est pas optimal dans certaines situations.

La présente invention a pour but de pallier au moins l'un de ces inconvénients et fournir une solution permettant de mutualiser ou non l'infrastructure de distribution électrique pour diffuser le premier signal et/ou le deuxième signal.

A cet effet l'invention concerne un système de distribution d'au moins un premier signal électrique dit primaire et d'un deuxième signal électrique dit secondaire dans une infrastructure de distribution électrique commune, comprenant au moins :
- une infrastructure de distribution électrique configurée pour permettre au moins la propagation d'au moins un premier signal électrique dit primaire et d'au moins un deuxième signal électrique dit secondaire, et étant destinée à être raccordée au moins en amont à un réseau électrique primaire ou à une source d'alimentation électrique primaire pour injecter le premier signal électrique dans ladite infrastructure de distribution électrique et étant destinée à être raccordée en aval à une installation électrique comprenant au moins un circuit électrique,
- un dispositif générateur de signal secondaire configuré pour générer ledit au moins un deuxième signal électrique dit secondaire et étant relié à l'infrastructure de distribution électrique au niveau d'au moins un point de connexion électrique,
caractérisé en ce que ladite infrastructure de distribution électrique comprend en outre au moins :
- un premier dispositif d'impédance de blocage du premier signal électrique configuré pour permettre le blocage de la propagation du premier signal électrique et
- un deuxième dispositif d'impédance de blocage du premier signal électrique et/ou du deuxième signal électrique configuré pour permettre le blocage de la propagation du premier signal électrique et/ou du deuxième signal électrique.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :

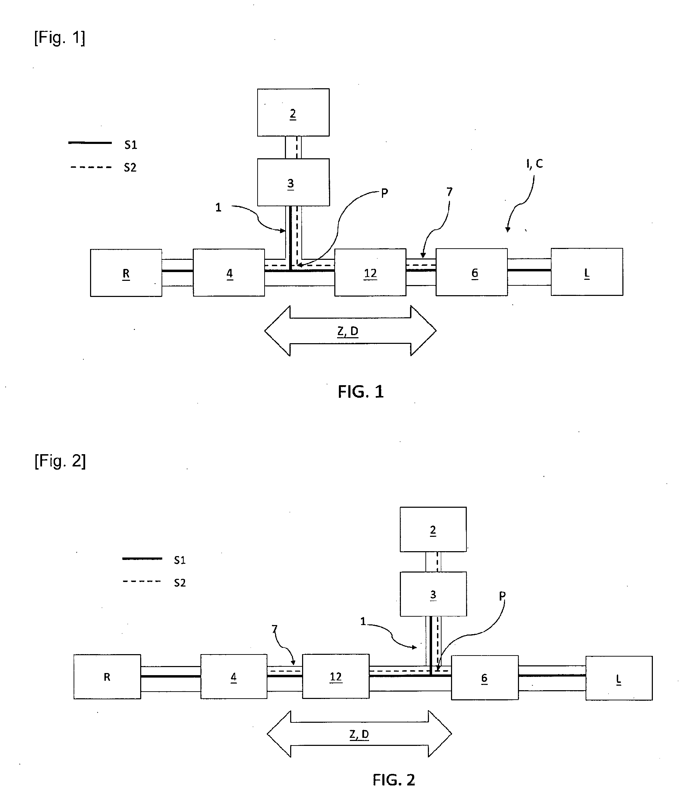

[Fig. 1] la figure 1 représente un schéma d'un système de distribution d'un premier signal électrique dit primaire et d'un deuxième signal électrique dit secondaire dans une infrastructure de distribution électrique commune selon une première variante de réalisation de l'invention,
[Fig. 2] la figure 2 représente un schéma d'un système de distribution d'un premier signal électrique dit primaire et d'un deuxième signal électrique dit secondaire dans une infrastructure de distribution électrique commune selon une deuxième variante de réalisation de l'invention,

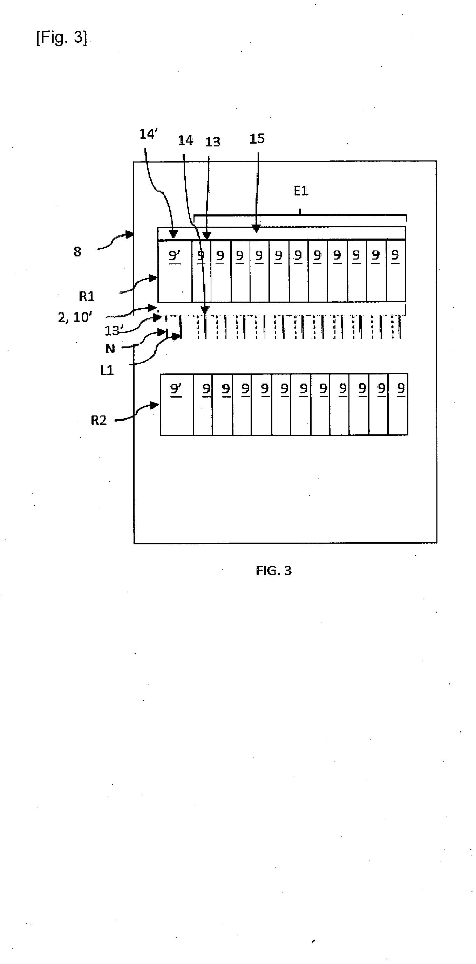

[Fig. 3] la figure 3 représente un schéma d'un système de distribution comprenant une infrastructure de distribution électrique qui comprend un dispositif de distribution électrique comprenant un ensemble d'appareillages électriques et un dispositif générateur de signal secondaire selon une troisième variante de réalisation de l'invention,

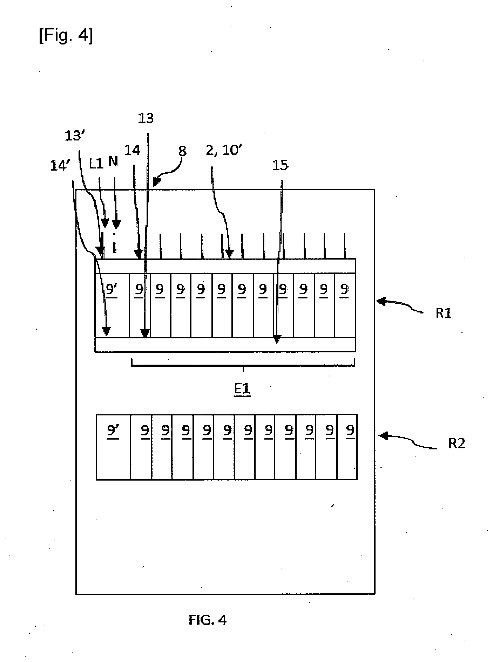

[Fig. 4] la figure 4 représente un schéma d'un système de distribution comprenant une infrastructure de distribution électrique qui comprend un dispositif de distribution électrique comprenant un ensemble d'appareillages électriques et un dispositif générateur de signal secondaire selon une quatrième variante de réalisation de l'invention,

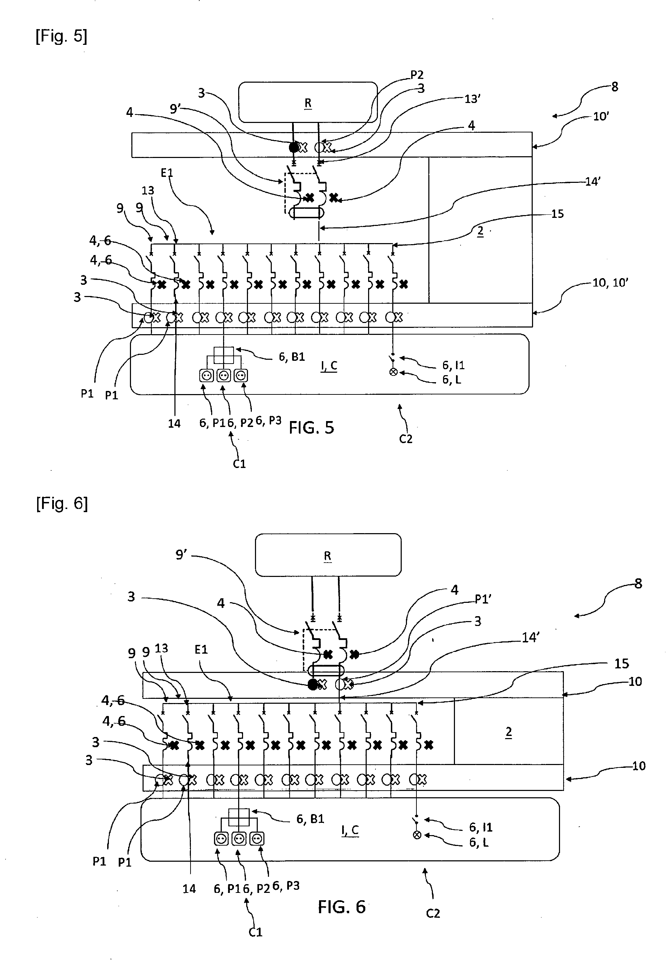

[Fig. 5] la figure 5 représente un schéma d'un système de distribution comprenant une infrastructure de distribution électrique qui comprend un dispositif de distribution électrique comprenant un ensemble d'appareillages électriques et un dispositif générateur de signal secondaire selon une cinquième variante de réalisation de l'invention,
[Fig. 6] la figure 6 représente un schéma d'un système de distribution comprenant une infrastructure de distribution électrique qui comprend un dispositif de distribution électrique comprenant un ensemble d'appareillages électriques et un dispositif générateur de signal secondaire selon une sixième variante de réalisation de l'invention, et

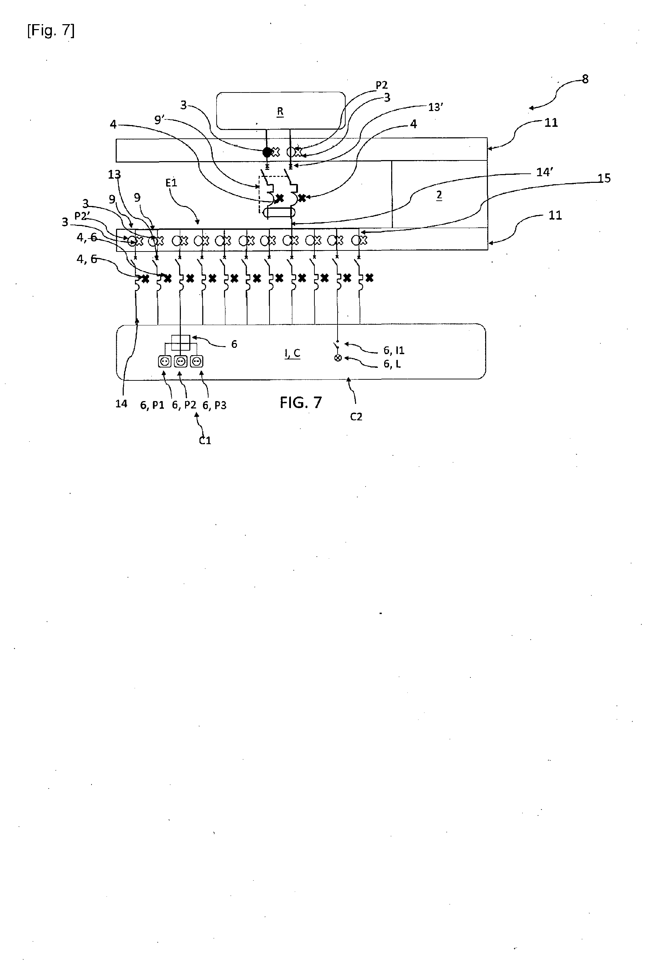

[Fig. 7] la figure 7 représente un schéma d'un système de distribution comprenant une infrastructure de distribution électrique qui comprend un dispositif de distribution électrique comprenant un ensemble d'appareillages électriques et un dispositif générateur de signal secondaire selon une septième variante de réalisation de l'invention.

Un système de distribution d'au moins un premier signal électrique S1 dit primaire et d'un deuxième signal électrique S2 dit secondaire dans une infrastructure de distribution électrique 1 commune, comprend au moins :
- une infrastructure de distribution électrique 1 configurée pour permettre au moins la propagation d'au moins un premier signal électrique S1 dit primaire et d' au moins un deuxième signal électrique S2 dit secondaire, et étant destinée à être raccordée au moins en amont à un réseau électrique primaire R ou à une source d'alimentation électrique primaire pour injecter le premier signal électrique S1 dans ladite infrastructure de distribution électrique 1 et étant destinée à être raccordée en aval à une installation électrique I comprenant au moins un circuit électrique C,
- un dispositif générateur de signal secondaire 2 configuré pour générer ledit au moins un deuxième signal électrique S2 dit secondaire et étant relié à l'infrastructure de distribution électrique 1 au niveau d'au moins un point de connexion électrique P, P1, P2.

Conformément à l'invention le système de distribution est caractérisé en ce que ladite infrastructure de distribution électrique 1 comprend en outre au moins :
- un premier dispositif d'impédance de blocage du premier signal électrique 3 configuré pour permettre le blocage de la propagation du premier signal électrique S1 et
- un deuxième dispositif d'impédance de blocage du premier signal électrique et/ou du deuxième signal électrique 4 configuré pour permettre le blocage de la propagation du premier signal électrique S1 et/ou du deuxième signal électrique S2.

Avantageusement et comme l'illustrent les figures, cette configuration permet de proposer une solution permettant la distribution d'un deuxième signal électrique S2 par exemple de communication ou de diagnostic dans une infrastructure de distribution électrique 1 initialement prévue pour transporter un premier signal électrique S1 par exemple de puissance. De plus, l'invention permet grâce au premier dispositif d'impédance de blocage du premier signal électrique 3 et/ou au deuxième dispositif d'impédance de blocage du premier signal électrique et/ou du deuxième signal électrique 4 qu'à certains endroits, l'infrastructure de distribution électrique 1 ne soit pas mutualisée pour autoriser uniquement le transport soit du deuxième signal électrique S2 soit du premier signal électrique S1. En effet, le premier dispositif d'impédance de blocage du premier signal électrique 3 et/ou le deuxième dispositif d'impédance de blocage du premier signal électrique et/ou du deuxième signal électrique 4 ont pour fonction de permettre de canaliser respectivement le premier signal électrique S1 et le deuxième signal électrique S2 vers des zones définies. Il en résulte que grâce à l'invention il est possible de canaliser ou ségréger le premier signal électrique S1 et/ou le deuxième signal électrique S2 et par conséquent de mutualiser ou non l'infrastructure de distribution électrique 1. Il est ainsi possible de cibler l'application et la diffusion de signaux dans l'installation électrique I située en aval. Cette disposition peut présenter des intérêts dans le domaine de la cybersécurité de l'installation électrique, puisqu'il est possible de tolérer ou bloquer le deuxième signal électrique S2 consistant par exemple en un signal de communication de type CPL.

De préférence et comme l'illustrent les figures 1 et 2, le système de distribution comprend en outre un troisième dispositif d'impédance de blocage du premier signal électrique et/ou du deuxième signal électrique 6 étant à une distance d'éloignement D du deuxième dispositif d'impédance de blocage du premier signal électrique et/ou du deuxième signal électrique 4 et relié électriquement à ce dernier par au moins un conducteur électrique de puissance 7, de sorte à définir sur ladite distance d'éloignement D une zone de propagation Z localisée dans laquelle la propagation du premier signal électrique S1/deuxième signal électrique S2 est autorisée.

Avantageusement, cette disposition permet en outre que la mutualisation de l'infrastructure de distribution électrique 1 et/ou de l'installation électrique I ne puisse être possible que sur certaines sections du conducteur électrique de puissance 7 de l'infrastructure de distribution électrique 1 et/ou de l'installation électrique I.

De préférence et comme l'illustrent les figures 3 à 7, l'infrastructure de distribution électrique 1 comprend en outre un dispositif de distribution électrique 8 comprenant un ensemble d'appareillages électriques 9, 9' de protection et/ou de distribution et/ou de communication et/ou de contrôle et/ou de commande configuré pour distribuer le premier signal électrique S1 et/ou le deuxième signal électrique S2 dans un ensemble de circuits électriques C de ladite installation électrique I.

Avantageusement, le système de distribution selon l'invention peut être utilisé avec un dispositif de distribution électrique 8 comprenant un ensemble d'appareillages électriques 9, 9' de protection et/ou de distribution et/ou de communication et/ou de contrôle et/ou de commande. Le premier signal électrique S1 et/ou le deuxième signal électrique S2 peut ainsi être distribué dans un ensemble de circuits électriques C de ladite installation électrique I.

De préférence et comme l'illustrent les figures 5 à 7, le deuxième/troisième dispositif d'impédance de blocage du premier signal électrique et/ou du deuxième signal électrique 4, 6 est intégré dans au moins un des appareillages électriques 9, 9' et comporte une impédance intrinsèque ou rapportée nativement dans celui-ci pour permettre le blocage de la propagation du deuxième signal électrique S2.

Dans cet agencement, on tire avantageusement parti de la présence des appareillages électriques 9, 9' du dispositif de distribution électrique 8. Il en résulte une absence de surcoûts puisqu'il n'est pas nécessaire d'ajouter un produit dédié pour réaliser la fonction d'impédance de blocage. En revanche, il est nécessaire de prévoir cette application possible de l'appareillage électrique 9, 9' au moment de sa conception.

De préférence et selon une variante non représentée, le deuxième/troisième dispositif d'impédance de blocage du premier signal électrique et/ou du deuxième signal électrique 4, 6 est intégré dans au moins un appareillage de blocage d'impédance dédié comportant une impédance ajoutée passive et/ou active pour permettre le blocage de la propagation du deuxième signal électrique S2.

Dans cet agencement, il est possible de rajouter par exemple dans un dispositif de distribution électrique 8 existant un produit dédié pour réaliser la fonction d'impédance de blocage. Le deuxième dispositif d'impédance de blocage du premier signal électrique et/ou du deuxième signal électrique 4 est situé de préférence dans le dispositif de distribution électrique 8.

De préférence et comme l'illustrent les figures 5 et 6, au moins un point de connexion électrique P1, P1' est disposé en aval d'au moins un des appareillages électriques 9, 9' de sorte à injecter le deuxième signal électrique S2 en aval dudit au moins un des appareillages électriques 9, 9'.

Avantageusement, cette disposition permet de diffuser le deuxième signal électrique S2 sans être dépendant de l'état par exemple de déclenchement ou non dudit au moins un appareillage électrique 9, 9' en aval duquel l'injection est réalisée.

De préférence et comme l'illustrent les figures 5 et 6, le dispositif générateur de signal secondaire 2 comprend un injecteur de signal centralisé aval 10 étant relié en aval des sorties 14 des appareillages électriques 9 du sous-ensemble E1 ou de l'ensemble des appareillages électriques 9, 9' au niveau d'un ensemble de points de connexion électriques P1, P1' de sorte à injecter de manière centralisée le deuxième signal électrique S2 en aval du sous-ensemble E1 d'appareillages électriques 9 ou en aval de l'ensemble des appareillages électriques 9, 9'.

Avantageusement, dans ce cas, grâce à l'injecteur de signal centralisé aval 10, il est possible d'injecter de manière centralisée dans tous les circuits électriques C alimentés par les appareillages électriques 9 du sous-ensemble E1 le cas échéant le deuxième signal électrique S2 sans être dépendant de l'état par exemple de déclenchement ou non de ces appareillages électriques 9. Cette centralisation permet une rationalisation de l'usage et des coûts.

L'injecteur de signal centralisé aval 10 comprend au moins un premier dispositif d'impédance de blocage du premier signal électrique 3 (figures 5 et 6) et/ou au moins un deuxième dispositif d'impédance de blocage du premier signal électrique et/ou du deuxième signal électrique 4.

Dans cet agencement, on tire avantageusement parti de la présence de l'injecteur de signal centralisé aval 10. Il en résulte une absence de surcoûts puisqu'il n'est pas nécessaire d'ajouter un produit dédié pour réaliser la fonction d'impédance de blocage. En revanche, il est nécessaire de prévoir cette application possible de l'injecteur de signal centralisé aval 10 au moment de sa conception. Si l'injecteur de signal centralisé aval 10 comprend au moins un premier dispositif d'impédance de blocage du premier signal électrique 3, alors la propagation du premier signal électrique dans le dispositif générateur de signal secondaire 2 peut être évitée (figures 5 et 6).

De préférence et selon une variante non représentée, le dispositif générateur de signal secondaire 2 comprend au moins un générateur de signal spécifique relié en aval d'au moins une sortie 14, 14' d'un des appareillages électriques 9, 9' de l'ensemble de sorte à injecter le deuxième signal électrique S2 en aval dudit un des appareillages électriques 9, 9' de l'ensemble.

Dans cette configuration, le générateur de signal spécifique consiste en un bloc additionnel de type AOB (Add On Block) associé spécifiquement audit un des appareillages électriques 9, 9'. Dans ce cas, il est possible d'injecter dans le circuit électrique C alimenté par l'appareillage électrique 9, 9' associé au générateur de signal spécifique le cas échéant le deuxième signal électrique S2 sans être dépendant de l'état par exemple de déclenchement ou non de cet appareillage électrique 9, 9'.

De préférence et selon une variante non représentée, le dispositif générateur de signal secondaire 2 comprend un ensemble de générateurs de signal spécifiques associé à chaque appareillage électrique 9 d'au moins un sous-ensemble E1 d'appareillage électrique 9 et chaque générateur de signal spécifique étant relié respectivement en aval d'une sortie 14 d'appareillage électrique 9 du sous-ensemble E1 de sorte à injecter le deuxième signal électrique S2 de manière individualisée en aval de chaque appareillage électrique 9 du sous-ensemble E1.

Dans cette configuration, chacun des appareillages électriques 9 du sous-ensemble E1 est associé à un générateur de signal spécifique. Avantageusement, dans ce cas, il est possible d'injecter de manière spécifique dans tous les circuits électriques C alimentés par l'appareillage électrique 9 du sous-ensemble E1 le cas échéant le deuxième signal électrique S2 sans être dépendant de l'état par exemple de déclenchement ou non de ces appareillages électriques 9.

De manière alternative et/ou additionnelle et comme l'illustrent notamment les figures 5 et 7, qu'au moins un point de connexion électrique P2, P2' est disposé en amont d'au moins un des appareillages électriques 9, 9' de sorte à injecter le deuxième signal électrique S2 en amont dudit au moins un des appareillages électriques 9, 9'.

Avantageusement, cette configuration permet, aussi d'injecter le deuxième signal électrique S2. Toutefois, dans cette configuration la propagation du deuxième signal S2 dans les circuits électriques C est dépendante de l'état par exemple de déclenchement ou non des appareillages électriques 9, 9'.

De préférence et comme le montre la figure 7, le dispositif générateur de signal secondaire 2 comprend un injecteur de signal centralisé amont 11 étant relié en amont de l'entrée 13, 13' de chaque appareillage électrique 9, 9' de l'ensemble au niveau d'un ensemble de points de connexion électriques P2, P2' de sorte à injecter le deuxième signal électrique S2 dans l'ensemble d'appareillages électriques 9, 9'.

Avantageusement, dans ce cas, grâce à l'injecteur de signal centralisé amont 11, il est possible d'injecter de manière centralisée dans tous les circuits électriques C alimentés par les appareillages électriques 9 du sous-ensemble E1 et dans ledit au moins un appareillage électrique 9' le cas échéant le deuxième signal électrique S2, mais en étant dépendant de l'état par exemple de déclenchement ou non des appareillages électriques 9, 9'.

De préférence, l'injecteur de signal centralisé amont 11 comprend au moins un premier dispositif d'impédance de blocage du premier signal électrique 3 (figure 7) et/ou au moins un deuxième dispositif d'impédance de blocage du premier signal électrique et/ou du deuxième signal électrique 4,

Dans cet agencement, on tire avantageusement parti de la présence de l'injecteur de signal centralisé amont 11. Il en résulte une absence de surcoûts puisqu'il n'est pas nécessaire d'ajouter un produit dédié pour réaliser la fonction d'impédance de blocage. En revanche, il est nécessaire de prévoir cette application possible de l'injecteur de signal centralisé amont 11 au moment de sa conception. Si l'injecteur de signal centralisé amont 11 comprend au moins un premier dispositif d'impédance de blocage du premier signal électrique 3, alors la propagation du premier signal électrique dans le dispositif générateur de signal secondaire 2 peut être évitée (figure 7).

De préférence et comme l'illustrent les figures 3 à 7, l'ensemble d'appareillages électriques 9, 9' comprend au moins un appareillage électrique 9' de tête et au moins une pluralité d'appareillages électriques 9 divisionnaires, la sortie 14' de l'appareillage électrique 9 de tête étant raccordée électriquement aux entrées 13 de la pluralité d'appareillages électriques divisionnaires 9' par des moyens de conduction électrique de préférence une barre de connexion 15.

De préférence, le dispositif générateur de signal secondaire 2 comprend un injecteur de signal centralisé aval et amont 10' étant relié en aval des sorties 14 des appareillages électriques 9 du sous-ensemble E1 au niveau d'un ensemble de points de connexion électriques P1, de sorte à injecter de manière centralisée le deuxième signal électrique S2 en aval du sous-ensemble E1 d'appareillages électriques 9 divisionnaires et étant relié en étant en amont de l'entrée 13' de l'appareillage électrique 9' de tête au niveau d'au moins un point de connexion électrique P2, de sorte à injecter le deuxième signal électrique S2 dans l'appareillage électrique 9' de tête.

Avantageusement, dans ce cas, grâce à l'injecteur de signal centralisé aval et amont 10', il est possible d'injecter le deuxième signal électrique S2 de manière centralisée dans ledit appareillage électrique 9' de tête mais en étant dépendant de l'état par exemple de son déclenchement ou non et dans tous les circuits électriques C alimentés par les appareillages électriques 9 divisionnaires du sous-ensemble E1, sans être dépendant de l'état par exemple de déclenchement ou non de ces appareillages électriques 9.

L'injecteur de signal centralisé aval et amont 10' comprend au moins un premier dispositif d'impédance de blocage du premier signal électrique 3 (figure 5) et/ou au moins un deuxième dispositif d'impédance de blocage du premier signal électrique et/ou du deuxième signal électrique 4.

De préférence, l'infrastructure de distribution électrique 1 comprend en outre un tableau électrique contenant le dispositif de distribution électrique 8 et le dispositif générateur de signal secondaire 2.

Avantageusement, cette configuration permet de regrouper le dispositif de distribution électrique 8 et le dispositif générateur de signal secondaire 2 en un même emplacement, ce qui facilite l'installation et la maintenance.

De préférence et comme l'illustrent les figures 5 à 7, le dispositif générateur de signal secondaire 2 est relié électriquement au réseau électrique primaire R ou à la source d'alimentation électrique primaire en amont du dispositif de distribution électrique 8 pour alimenter le dispositif générateur de signal secondaire 2.

Avantageusement, cette configuration permet une alimentation du dispositif générateur de signal secondaire 2 en amont des appareillages électriques 9, 9'.

De préférence, le dispositif générateur de signal secondaire 2 est configuré pour générer ledit au moins un deuxième signal électrique S2 dit secondaire étant un signal de communication de données.

Dans cette variante, le deuxième signal électrique S2 dit secondaire est un signal de communication de données.

De préférence, le dispositif générateur de signal secondaire 2 est configuré d'une part pour générer ledit au moins un deuxième signal électrique S2 dit secondaire étant un signal de diagnostic de ligne.

Dans cette variante, le deuxième signal électrique S2 dit secondaire peut être utilisé par exemple pour diagnostiquer l'installation électrique I et/ou l'infrastructure de distribution électrique 1.

De préférence et comme le montrent les figures 1 et 2, le système de distribution comprend en outre au moins un dispositif de signature électrique 12 configuré pour former un repère dans l'installation électrique I et/ou dans l'infrastructure de distribution électrique 1 (figures 1 et 2).

Dans ce cas, il est avantageusement possible de se repérer dans l'installation électrique I et/ou dans l'infrastructure de distribution électrique 1 (figures 1 et 2) lors d'un diagnostic.

De préférence, l'infrastructure de distribution électrique 1 comprend au moins un support physique pour permettre au moins la propagation du premier signal électrique S1 dit primaire et du deuxième signal électrique S2 dit secondaire. L'infrastructure de distribution électrique 1 peut se matérialiser par des conducteurs électriques de puissance 7 tels que des câbles et/ou des fils et/ou des lignes et/ou des appareillages électriques 9, 9'. Les lignes électriques peuvent être une ligne de phase L1 et/ou une ligne de terre et/ou une ligne de neutre N.

Le réseau électrique primaire R est de préférence un réseau traditionnel courant alternatif ou courant continu.

Le premier signal électrique S1 est de préférence un signal électrique de puissance en courant continu ou en courant alternatif (110/ 230/ 400 Volts, 50/60 hertz ou plus généralement inférieur à 120 hertz)

Le dispositif générateur de signal secondaire 2 permet de générer le deuxième signal électrique S2. Le dispositif générateur de signal secondaire 2 est raccordé à l'infrastructure de distribution électrique 1 par au moins un point de connexion électrique P, P1, P1', P2, P2'. Il est de préférence alimenté par une source électrique par exemple le réseau électrique primaire R.

Le deuxième signal électrique S2 est un signal électrique additionnel, par exemple un signal électrique de communication et/ou un signal électrique de diagnostic de ligne.

Le système de distribution comprend de préférence au moins un ou plusieurs premier(s) dispositif(s) d'impédance de blocage du premier signal électrique 3, et/ou deuxième(s) dispositif(s) d'impédance de blocage du premier signal électrique et/ou du deuxième signal électrique 4, et/ou troisième(s) dispositif(s) d'impédance de blocage du premier signal électrique et/ou du deuxième signal électrique 6.

Le premier dispositif d'impédance de blocage du premier signal électrique 3 permet de bloquer la propagation du premier signal électrique S1 localement dans l'infrastructure de distribution électrique 1.

Le deuxième dispositif d'impédance de blocage du premier signal électrique et/ou du deuxième signal électrique 4 permet de bloquer la propagation du premier signal électrique S1 et/ou du deuxième signal électrique S2 localement dans l'infrastructure de distribution électrique 1.

Le troisième dispositif d'impédance de blocage du premier signal électrique et/ou du deuxième signal électrique 6 permet de bloquer la propagation du premier signal électrique S1 et/ou du deuxième signal électrique S2 localement dans l'infrastructure de distribution électrique 1.

Dans l'infrastructure de distribution électrique 1, une zone de propagation Z localisée peut être créée entre le deuxième dispositif d'impédance de blocage du premier signal électrique et/ou du deuxième signal électrique 4 et le troisième dispositif d'impédance de blocage du premier signal électrique et/ou du deuxième signal électrique 6 dans laquelle le premier signal électrique S1 et/ou le deuxième signal électrique S2 se propage.

Le premier dispositif d'impédance de blocage du premier signal électrique 3 et/ou deuxième dispositif d'impédance de blocage du premier signal électrique et/ou du deuxième signal électrique 4, et/ou le deuxième dispositif d'impédance de blocage du premier signal électrique et/ou le troisième dispositif d'impédance de blocage du premier signal électrique et/ou du deuxième signal électrique 6 sont situés dans l'infrastructure de distribution électrique 1. Dans une autre variante, ils pourraient être disposés dans l'installation électrique I ou dans l'infrastructure de distribution électrique 1 et dans l'installation électrique I.

Le premier dispositif d'impédance de blocage du premier signal électrique 3 et/ou le deuxième dispositif d'impédance de blocage du premier signal électrique et/ou du deuxième signal électrique 4, et/ou le troisième dispositif d'impédance de blocage du premier signal électrique et/ou du deuxième signal électrique 6 peuvent être des impédances ajoutées et/ou des impédances intrinsèques de produits. Par exemple dans le cas d'impédances ajoutées, il peut s'agir de composants passifs de type RLC mais des composants actifs peuvent également être envisagés. Les impédances ajoutées peuvent être intégrées à un produit existant lors de l'ajout d'une fonction supplémentaire. C'est le cas par exemple lorsqu'on ajoute des capteurs de mesure à un produit pour le comptage divisionnaire.

Le premier dispositif d'impédance de blocage du premier signal électrique 3 est situé dans l'infrastructure de distribution électrique 1 de préférence en aval du dispositif générateur de signal secondaire 2 et de préférence à la sortie du dispositif générateur de signal secondaire 2 pour éviter la propagation du premier signal électrique S1 dans ce dernier.

Le deuxième dispositif d'impédance de blocage du premier signal électrique et/ou du deuxième signal électrique 4 et/ou le troisième dispositif d'impédance de blocage du premier signal électrique et/ou du deuxième signal électrique 6 sont de préférence situés dans l'infrastructure de distribution électrique 1. De préférence, ils sont situés dans le dispositif de distribution électrique 8 et intégrés dans un des appareillages électriques 9, 9'.

Les troisièmes dispositifs d'impédance de blocage du premier signal électrique et/ou du deuxième signal électrique 6 sont de préférence situés dans l'infrastructure de distribution électrique 1 et/ou dans l'installation électrique I. De préférence, ils sont situés dans le dispositif de distribution électrique 8 et intégrés dans un des appareillages électriques 9, 9'. En fonction des variantes considérées, les troisièmes dispositifs d'impédance de blocage du premier signal électrique et/ou du deuxième signal électrique 6 peuvent être situés sur un ou plusieurs circuits électriques C, C1, C2, par exemple au niveau d'une interruption de fil volontaire (boîte de dérivation B1 ou appareillage mural P1, P2, P3, I1) et/ou situés en aval du dispositif générateur de signal secondaire 2, de telle sorte à ce qu'il soit voisin immédiat des appareillages électriques 9, 9' ou intégré à ceux-ci.

Le deuxième dispositif d'impédance de blocage du premier signal électrique et/ou du deuxième signal électrique 4, et/ou le troisième dispositif d'impédance de blocage du premier signal électrique et/ou du deuxième signal électrique 6 peuvent présenter un caractère directionnel. Par exemple, si le deuxième signal électrique S2 est un signal de diagnostic, celui peut être orienté pour mesurer le réseau électrique primaire R, par exemple au niveau du lien entre compteur et tableau ou encore le lien amont depuis le dispositif générateur de signal secondaire 2, auquel cas les dispositifs d'impédance de blocage et le dispositif de signature électrique 12 seront mis du coté amont du point de connexion électrique P. Il en va de manière similaire de préférence pour le premier dispositif d'impédance de blocage du premier signal électrique 3

Le deuxième dispositif d'impédance de blocage du premier signal électrique et/ou du deuxième signal électrique 4, et/ou le troisième dispositif d'impédance de blocage du premier signal électrique et/ou du deuxième signal électrique 6 peuvent présenter un caractère sélectif. Dans ce cas, ils laissent passer certains signaux d'énergie secondaire S2 et en bloquent d'autres, la discrimination se faisant au niveau du spectre de fréquences en jeu. Ils peuvent aussi être également paramétrables et permettre le réglage de la bande de fréquences à rejeter / à laisser passer.

Le deuxième dispositif d'impédance de blocage du premier signal électrique et/ou du deuxième signal électrique 4 est situé dans l'infrastructure de distribution électrique 1 de préférence en aval du réseau électrique primaire R et de préférence à la sortie du réseau électrique primaire R pour éviter la propagation du deuxième signal électrique S2 dans ce dernier.

Le dispositif de distribution électrique 8 permet de distribuer le premier signal électrique S1 et/ou le deuxième signal électrique S2 dans un ensemble de circuits électriques C de ladite installation électrique I. Le dispositif de distribution électrique 8 comprend à cet effet une pluralité d'appareillages électriques 9, 9' pouvant être par exemple un interrupteur et/ou un contacteur et/ou un interrupteur commandé et/ou un interrupteur différentiel et/ou un disjoncteur et/ou un disjoncteur différentiel et/ou un compteur et/ou un appareillage domotique.

Un appareillage électrique 9, 9' comprend une entrée 13, 13' prévue pour être raccordée au moins en amont au réseau électrique primaire R ou à une source d'alimentation électrique primaire et une sortie 14, 14' prévue pour être raccordée à au moins un des circuits électriques C. Au moins une ligne électrique est présente entre l'entrée 13, 13' et la sortie 14, 14'. Les lignes électriques peuvent être une ligne de phase L1 et/ou une ligne de terre et/ou une ligne de neutre N.

Le dispositif de distribution électrique 8 peut comprendre au moins un appareillage électrique 9' de tête et/ou au moins un appareillage électrique 9 divisionnaire. Par exemple, le dispositif de distribution électrique 8 peut comprendre une pluralité de rangées R1, R2 comprenant chacune un appareillage électrique 9' de tête et plusieurs appareillages électriques 9 divisionnaires. La sortie 14' de l'appareillage électrique 9 de tête est de préférence raccordée électriquement aux entrées 13 de la pluralité d'appareillages électriques divisionnaires 9' par des moyens de conduction électrique de préférence une barre de connexion 15.

Les appareillages électriques 9, 9' sont de préférence au format modulaire.

L'injecteur de signal centralisé aval 10 ou l'injecteur de signal centralisé amont 11 ou l'injecteur de signal centralisé aval et amont 10' ont pour fonction d'injecter de manière centralisée le deuxième signal électrique S2 généré par le dispositif injecteur de signal secondaire 2, auquel ils sont reliés, dans les appareillages électriques 9, 9'. On évite ainsi le recours à une multitude de dispositifs générateurs de signal secondaires 2. L'injecteur de signal centralisé aval 10 ou l'injecteur de signal centralisé amont 11 ou l'injecteur de signal centralisé aval et amont 10' peuvent se présenter sous la forme d'une barre de connexion additionnelle.

Le dispositif de signature électrique 12 a pour fonction de former un repère dans l'installation électrique I et/ou dans l'infrastructure de distribution électrique 1. Le dispositif de signature électrique 12 forme un marqueur électrique ou un repère. Il peut s'agir d'un dispositif physique intégré ou non à des produits permettant de créer une signature spécifique. Ce dispositif de signature électrique 12 peut être issu d'un mode de conception ne nécessitant pas de composants physiques additionnels autrement dit il peut être passif actif (composant de type RLC) ou actif (transistor relais et/ou interrupteur).

L'installation électrique I peut comprendre plusieurs circuits électriques C, C1, C2. Chaque circuit électrique C, C1, C2 comprend de préférence ou non une ou plusieurs charges et/ou une ou plusieurs prises murales P1, P2, P3 et/ou un ou plusieurs interrupteurs muraux I1 et/ou une ou plusieurs boîtes de dérivation B1.

Le dispositif générateur de signal secondaire 2, tout comme les dispositifs d'impédance de blocage 3, 4, 5, 6 et/ou le dispositif de signature électrique 12 peuvent être mis en place de manière équivalente entre phase et neutre, phase et terre ainsi qu'entre terre et neutre, les deux derniers cas de figure permettant en particulier le contrôle d'isolement. Par ailleurs, par extension les dispositions décrites peuvent être étendues à des installations triphasées.

La figure 1 illustre une variante de réalisation dans laquelle le système de distribution comprend une infrastructure de distribution électrique 1 raccordée en amont à un réseau électrique primaire R et raccordée en amont au dispositif générateur de signal secondaire 2 au niveau du point de connexion électrique P. Le système de distribution comprend en outre le premier dispositif d'impédance de blocage du premier signal électrique 3 situé dans l'infrastructure de distribution électrique 1, raccordé en aval du dispositif générateur de signal secondaire 2 au niveau de sa sortie et en aval un réseau électrique primaire R, mais en amont de l'installation électrique I. Le système de distribution comprend en outre le deuxième dispositif d'impédance de blocage du premier signal électrique et/ou du deuxième signal électrique 4 situé dans l'infrastructure de distribution électrique 1 raccordé en aval du réseau électrique primaire R au niveau de sa sortie, en aval du générateur de signal secondaire 2 et en amont de l'installation électrique I. Le système de distribution comprend en outre le troisième dispositif d'impédance de blocage du premier signal électrique et/ou du deuxième signal électrique 6 situé dans l'infrastructure de distribution électrique 1 à distance du deuxième dispositif d'impédance de blocage du premier signal électrique et/ou du deuxième signal électrique 4 en aval du dispositif générateur de signal secondaire 2 en aval du réseau électrique primaire R, et en amont de l'installation électrique I. Le troisième dispositif d'impédance de blocage du premier signal électrique et/ou du deuxième signal électrique 6 est à la distance d'éloignement D du deuxième dispositif d'impédance de blocage du premier signal électrique et/ou du deuxième signal électrique 4 et est relié électriquement à ce dernier par au moins un conducteur électrique de puissance 7, de sorte à définir sur ladite distance d'éloignement D la zone de propagation Z localisée dans laquelle la propagation du deuxième signal électrique S2 est autorisée. Le système de distribution comprend le dispositif de signature électrique 12 qui fait partie de l'infrastructure de distribution électrique 1 et qui est disposé entre le deuxième dispositif d'impédance de blocage du premier signal électrique et/ou du deuxième signal électrique 4 et le troisième dispositif d'impédance de blocage du premier signal électrique et/ou du deuxième signal électrique 6 de telle sorte à ce qu'il soit voisin immédiat de ce dernier. Dans ce cas usuel, le troisième dispositif d'impédance de blocage du premier signal électrique et/ou du deuxième signal électrique 6 est par exemple situé au niveau d'un circuit électrique C de l'installation électrique I; par exemple au niveau d'une interruption de fil volontaire (boîte de dérivation ou appareillage mural).

La figure 2 illustre une variante de réalisation similaire à celle de la figure 1 mais dans laquelle le dispositif de signature électrique 12 est voisin immédiat du deuxième dispositif d'impédance de blocage du premier signal électrique et/ou du deuxième signal électrique 4, ce dernier étant lui-même voisin immédiat du point d'accès au réseau électrique primaire R. Par ailleurs le troisième dispositif d'impédance de blocage du deuxième signal électrique 6 est cette fois-ci situé en aval du dispositif générateur de signal secondaire 2, de telle sorte à ce qu'il puisse être par exemple soit voisin immédiat des appareillages électriques 9, 9' ou intégré à ceux-ci. La figure 2 illustre une variante différente de l'invention, mais représentée sous la même vue. Sa mise en place se distingue en pratique par rapport à celle illustrée par la figure 1 par une différence d'emplacement de certains des dispositifs qu'elle met en jeu, permettant ainsi de faire circuler le deuxième signal d'énergie secondaire sur d'autres portions de circuit.

La figure 3 illustre une variante de réalisation dans laquelle le système de distribution comprend le dispositif de distribution électrique 8 comprenant une première rangée R1 comprenant un appareillage électrique 9' de tête et une pluralité d'appareillages électriques divisionnaires 9, ces derniers formant le sous-ensemble E1 et une deuxième rangée R2 comprenant un appareillage électrique 9' de tête et une pluralité d'appareillages électriques divisionnaires 9. La sortie 14' de l'appareillage électrique 9' de tête est raccordée électriquement aux entrées 13 de la pluralité d'appareillages électriques divisionnaires 9' par une barre de connexion 15. Au niveau de la première rangée R1, le dispositif générateur de signal secondaire 2 qui prend la forme de l'injecteur de signal centralisé aval et amont 10' est relié à l'entrée 13' de l'appareillage électrique 9' de tête en amont de l'appareillage électrique 9' de tête et d'autre part est relié aux sorties 14 respectives de la pluralité d'appareillages électriques divisionnaires 9 en aval de la pluralité d'appareillages électriques divisionnaires 9. L'entrée 13' de l'appareillage électrique 9' de tête est située sur la partie inférieure de l'appareillage électrique 9' de tête, tandis que les sorties 14 respectives de la pluralité d'appareillages électriques divisionnaires 9' sont respectivement situées sur la partie inférieure de l'appareillage électrique divisionnaires 9. Le dispositif générateur de signal secondaire 2 sous la forme de l'injecteur de signal centralisé aval et amont 10' est situé du côté des parties inférieures de l'appareillage électrique 9' de tête et de la pluralité d'appareillages électriques divisionnaires 9.

La figure 4 illustre une variante de réalisation dans laquelle le système de distribution comprend le dispositif de distribution électrique 8 comprenant une première rangée R1 comprenant un appareillage électrique 9' de tête et une pluralité d'appareillages électriques divisionnaires 9, ces derniers formant le sous-ensemble E1 et une deuxième rangée R2 comprenant un appareillage électrique 9' de tête et une pluralité d'appareillages électriques divisionnaires 9. La sortie 14' de l'appareillage électrique 9' de tête est raccordée électriquement aux entrées 13 de la pluralité d'appareillages électriques divisionnaires 9 par une barre de connexion 15. Au niveau de la première rangée R1, le dispositif générateur de signal secondaire 2 sous la forme de l'injecteur de signal centralisé aval et amont 10' est relié à l'entrée 13' de l'appareillage électrique 9' de tête en amont de l'appareillage électrique 9' de tête et d'autre part est relié aux sorties 14 respectives de la pluralité d'appareillages électriques divisionnaires 9' en aval de la pluralité d'appareillages électriques divisionnaires 9. L'entrée 13' de l'appareillage électrique 9' de tête est située sur la partie supérieure de l'appareillage électrique 9' de tête, tandis que les sorties 14 respectives de la pluralité d'appareillages électriques divisionnaires 9 sont respectivement situées sur la partie supérieure de l'appareillage électrique divisionnaires 9. Le dispositif générateur de signal secondaire 2 sous la forme de l'injecteur de signal centralisé aval et amont 10' est situé du côté des parties supérieures de l'appareillage électrique 9' de tête et de la pluralité d'appareillages électriques divisionnaires 9.

La figure 5 illustre une variante de réalisation dans laquelle le système de distribution comprend le dispositif de distribution électrique 8, lequel est raccordé en amont à un réseau électrique primaire R ce qui permet l'injection du premier signal électrique S1. Le dispositif de distribution électrique 8 comprend un appareillage électrique 9' de tête et une pluralité d'appareillages électriques divisionnaires 9, ces derniers formant le sous-ensemble E1. La sortie 14' de l'appareillage électrique 9' de tête est raccordée électriquement aux entrées 13 de la pluralité d'appareillages électriques divisionnaires 9 par une barre de connexion 15. Chaque appareillage électrique 9 divisionnaire est relié électriquement au niveau de sa sortie 14 à un circuit électrique C d'une installation électrique I. Le dispositif de distribution électrique 8 est raccordé en outre au dispositif générateur de signal secondaire 2 par l'intermédiaire de l'injecteur de signal centralisé aval et amont 10'. Le dispositif de distribution électrique 8 est raccordé au dispositif générateur de signal secondaire 2 au niveau d'un point de connexion électrique P2 unique disposé en amont de l'appareillage électrique 9' de tête de sorte à injecter le deuxième signal électrique S2 en amont de l'appareillage électrique 9' de tête. Plus particulièrement, le point de connexion électrique P2 unique est en amont de l'entrée 13' de l'appareillage électrique 9' de tête. Le dispositif de distribution électrique 8 est raccordé en outre au dispositif générateur de signal secondaire 2 au niveau de plusieurs points de connexions électriques P1 respectivement disposés en aval des appareillages électriques 9 divisionnaires du sous-ensemble E1 de sorte à injecter le deuxième signal électrique S2 en aval des appareillages électriques 9 divisionnaires du sous-ensemble E1. Le dispositif générateur de signal secondaire 2 comprend l'injecteur de signal centralisé aval et amont 10' étant relié en aval des sorties 14 des appareillages électriques 9 divisionnaires du sous-ensemble E1 au niveau de l'ensemble de points de connexion électriques P1 et relié en amont de l'entrée 13' de l'appareillage électrique 9' de tête au niveau de l'unique point de connexion électrique P2 de sorte à injecter de manière centralisée le deuxième signal électrique S2 en aval du sous-ensemble E1 d'appareillages électriques 9 divisionnaires et en amont de l'appareillage électrique 9' de tête. Le système de distribution comprend plusieurs deuxièmes/troisième dispositifs d'impédance de blocage du premier signal électrique et/ ou deuxième signal électrique 4, 6 qui sont intégrés dans les appareillages électriques 9 divisionnaires et dans l'appareillage électrique 9' de tête et comportent chacun une impédance intrinsèque ou rapportée nativement dans celui-ci pour permettre le blocage de la propagation du deuxième signal électrique S2. Dans cet exemple, les troisièmes dispositifs d'impédance de blocage du deuxième signal électrique 6 sont en outre situés dans l'installation électrique I au niveau d'une boîte de dérivation B1 et de plusieurs appareillages muraux de types prises murales P1, P2, P3 d'un premier circuit électrique C1 et au niveau d'un appareillage mural de type interrupteur mural I1 et d'une charge L d'un deuxième circuit électrique C2. L'injecteur de signal centralisé aval et amont 10' comprend plusieurs premiers dispositifs d'impédance de blocage du premier signal électrique 3 pour éviter la propagation du premier signal électrique S1 dans le dispositif générateur de signal secondaire 2. Dans cet exemple, le deuxième signal électrique S2 se propage dans l'appareillage électrique 9' de tête, mais ne se propage pas dans les appareillages électriques 9 divisionnaires. Le deuxième signal électrique S2 se propage directement vers les différents circuits électriques C, C1, C2. Le premier signal électrique S1 ne se propage pas dans le dispositif générateur de signal secondaire 2.

La figure 6 illustre une variante de réalisation dans laquelle le système de distribution comprend le dispositif de distribution électrique 8, lequel est raccordé en amont à un réseau électrique primaire R ce qui permet l'injection du premier signal électrique S1. Le dispositif de distribution électrique 8 comprend un appareillage électrique 9' de tête et une pluralité d'appareillages électriques divisionnaires 9, ces derniers formant le sous-ensemble E1. La sortie 14' de l'appareillage électrique 9 de tête est raccordée électriquement aux entrées 13 de la pluralité d'appareillages électriques divisionnaires 9 par une barre de connexion 15. Chaque appareillage électrique 9 divisionnaire est relié électriquement au niveau de sa sortie 14 à un circuit électrique C d'une installation électrique I. Le dispositif de distribution électrique 8 est raccordé en outre au dispositif générateur de signal secondaire 2 par l'intermédiaire de l'injecteur de signal centralisé aval 10. Le dispositif de distribution électrique 8 est raccordé au dispositif générateur de signal secondaire 2 au niveau d'un unique point de connexion électrique P1' disposé en aval de l'appareillage électrique 9' de tête de sorte à injecter le deuxième signal électrique S2 en aval de l'appareillage électrique 9' de tête. Le dispositif de distribution électrique 8 est raccordé en outre au dispositif générateur de signal secondaire 2 au niveau de plusieurs points de connexions électriques P1 respectivement disposés en aval des appareillages électriques 9 divisionnaires du sous-ensemble E1 de sorte à injecter le deuxième signal électrique S2 en aval des appareillages électriques 9 divisionnaires du sous-ensemble E1. Le dispositif générateur de signal secondaire 2 comprend le générateur de signal centralisé aval 10 étant relié en aval de la sortie 14' de l'appareillage électrique 9' de tête au niveau de l'unique point de connexion P1' et en aval des sorties 14 des appareillages électriques 9 divisionnaires du sous-ensemble E1 au niveau de l'ensemble de points de connexion électriques P1 de sorte à injecter de manière centralisée le deuxième signal électrique S2 en aval de l'appareillage électrique 9' de tête et du sous-ensemble E1 d'appareillages électriques 9 divisionnaires. Le système de distribution comprend plusieurs deuxièmes/troisièmes dispositifs d'impédance de blocage du premier signal électrique et/ou du deuxième signal électrique 4, 6 qui sont intégrés dans les appareillages électriques 9 divisionnaires et dans l'appareillage électrique 9' de tête et comportent chacun une impédance intrinsèque ou rapportée nativement dans celui-ci pour permettre le blocage de la propagation du deuxième signal électrique S2. Dans cet exemple, les troisièmes dispositifs d'impédance de blocage du deuxième signal électrique 6 sont en outre situés dans l'installation électrique I au niveau d'une boîte de dérivation B1 et de plusieurs appareillages muraux de types prises murales P1, P2, P3 d'un premier circuit électrique C1 et au niveau d'un appareillage mural de type interrupteur mural I1 et d'une charge L d'un deuxième circuit électrique C2. L'injecteur de signal centralisé aval 10 comprend plusieurs premiers dispositifs d'impédance de blocage du premier signal électrique 3 pour éviter la propagation du premier signal électrique S1 dans le dispositif générateur de signal secondaire 2.

Dans cet exemple, le deuxième signal électrique S2 ne se propage pas dans l'appareillage électrique 9' de tête, mais se propage dans les appareillages électriques 9 divisionnaires. Le deuxième signal électrique S2 se propage directement vers les différents circuits électriques C, C1, C2. Le premier signal électrique S1 ne se propage pas dans le dispositif générateur de signal secondaire 2.

La figure 7 illustre une variante de réalisation dans laquelle le système de distribution comprend le dispositif de distribution électrique 8, lequel est raccordé en amont à un réseau électrique primaire R ce qui permet l'injection du premier signal électrique S1. Le dispositif de distribution électrique 8 comprend un appareillage électrique 9' de tête et une pluralité d'appareillages électriques divisionnaires 9, ces derniers formant le sous-ensemble E1. La sortie 14' de l'appareillage électrique 9' de tête est raccordée électriquement aux entrées 13 de la pluralité d'appareillages électriques divisionnaires 9 par une barre de connexion 15. Chaque appareillage électrique 9 divisionnaire est relié électriquement au niveau de sa sortie 14 à un circuit électrique C d'une installation électrique I. Le dispositif de distribution électrique 8 est raccordé en outre au dispositif générateur de signal secondaire 2 par l'intermédiaire de l'injecteur de signal centralisé amont 11. Le dispositif de distribution électrique 8 est raccordé en outre au dispositif générateur de signal secondaire 2 au niveau d'un point de connexion électrique P2 unique disposé en amont de l'appareillage électrique 9' de tête de sorte à injecter le deuxième signal électrique S2 en amont de l'appareillage électrique 9' de tête et au niveau d'une pluralité de points de connexion P2' disposés en amont des appareillages électriques 9 divisionnaires de sorte à injecter le deuxième signal électrique S2 en amont du sous-ensemble E1 d'appareillages électriques 9 divisionnaires. Plus particulièrement, le point de connexion électrique P2 unique est en amont de l'entrée 13' de l'appareillage électrique 9' de tête et la pluralité de points de connexion P2' est en amont des entrées 13 de chaque appareillage électrique 9 divisionnaire. Le dispositif générateur de signal secondaire 2 comprend l'injecteur de signal centralisé amont 11 étant relié en amont de l'entrée 13, 13' de chaque appareillage électrique 9, 9' de l'ensemble au niveau d'un ensemble de points de connexion électriques P2, P2' de sorte à injecter le deuxième signal électrique S2 dans l'ensemble d'appareillages électriques 9, 9'. Le système de distribution comprend plusieurs deuxièmes/troisièmes dispositifs d'impédance de blocage du premier signal électrique et/ou deuxième signal électrique 4, 6 qui sont intégrés dans les appareillages électriques 9 divisionnaires et dans l'appareillage électrique 9' de tête et comportent chacun une impédance intrinsèque ou rapportée nativement dans celui-ci pour permettre le blocage de la propagation du deuxième signal électrique S2. L'injecteur de signal centralisé amont 11 comprend plusieurs premiers dispositifs d'impédance de blocage du premier signal électrique 3 pour éviter la propagation du premier signal électrique S1 dans le dispositif générateur de signal secondaire 2.

Dans cet exemple, le deuxième signal électrique S2 se propage dans l'appareillage électrique 9' de tête et se propage dans les appareillages électriques 9 divisionnaires. Le deuxième signal électrique S2 ne se propage pas dans les différents circuits électriques C. Le premier signal électrique S1 ne se propage pas dans le dispositif générateur de signal secondaire 2. Le deuxième signal électrique S2 se propage vers le point d'accès au réseau électrique primaire R, et non pas vers l'installation électrique I.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Système de distribution d'au moins un premier signal électrique (S1) dit primaire et d'un deuxième signal électrique (S2) dit secondaire dans une infrastructure de distribution électrique (1) commune, comprenant au moins :
- une infrastructure de distribution électrique (1) configurée pour permettre au moins la propagation d'au moins un premier signal électrique (S1) dit primaire et d'au moins un deuxième signal électrique (S2) dit secondaire, et étant destinée à être raccordée au moins en amont à un réseau électrique primaire (R) ou à une source d'alimentation électrique primaire pour injecter le premier signal électrique (S1) dans ladite infrastructure de distribution électrique (1) et étant destinée à être raccordée en aval à une installation électrique (I) comprenant au moins un circuit électrique (C),
- un dispositif générateur de signal secondaire (2) configuré pour générer ledit au moins un deuxième signal électrique (S2) dit secondaire et étant relié à l'infrastructure de distribution électrique (1) au niveau d'au moins un point de connexion électrique (P, P1, P2),
**caractérisé en ce que** ladite infrastructure de distribution électrique (1) comprend en outre au moins :
- un premier dispositif d'impédance de blocage du premier signal électrique (3) configuré pour permettre le blocage de la propagation du premier signal électrique (S1) et
- un deuxième dispositif d'impédance de blocage du premier signal électrique et/ou du deuxième signal électrique (4) configuré pour permettre le blocage de la propagation du premier signal électrique (S1) et/ou du deuxième signal électrique (S2).

2. Système de distribution selon la revendication 1, **caractérisé en ce qu'**il comprend en outre un troisième dispositif d'impédance de blocage du premier signal électrique et/ou du deuxième signal électrique (6) étant à une distance d'éloignement (D) du deuxième dispositif d'impédance de blocage du premier signal électrique et/ou du deuxième signal électrique (4) et relié électriquement à ce dernier par au moins un conducteur électrique de puissance (7), de sorte à définir sur ladite distance d'éloignement (D) une zone de propagation (Z) localisée dans laquelle la propagation du premier signal électrique (S1)/deuxième signal électrique (S2) est autorisée.

3. Système de distribution selon l'une quelconque des revendication 1 à 2, **caractérisé en ce que** l'infrastructure de distribution électrique (1) comprend en outre un dispositif de distribution électrique (8) comprenant un ensemble d'appareillages électriques (9, 9') de protection et/ou de distribution et/ou de communication et/ou de contrôle et/ou de commande configuré pour distribuer le premier signal électrique (S1) et/ou le deuxième signal électrique (S2) dans un ensemble de circuits électriques (C) de ladite installation électrique (I).

4. Système de distribution selon la revendication 2 ou la revendication 3, **caractérisé en ce que** le deuxième/troisième dispositif d'impédance de blocage du premier signal électrique et/ou du deuxième signal électrique (4, 6) est intégré dans au moins un des appareillages électriques (9, 9') et comporte une impédance intrinsèque ou rapportée nativement dans celui-ci pour permettre le blocage de la propagation du deuxième signal électrique (S2).

5. Système de distribution selon l'une quelconque des revendications 2 à 4, **caractérisé en ce que** le deuxième/troisième dispositif d'impédance de blocage du premier signal électrique et/ou du deuxième signal électrique (4, 6) est intégré dans au moins un appareillage de blocage d'impédance dédié comportant une impédance ajoutée passive et/ou active pour permettre le blocage de la propagation du deuxième signal électrique (S2).

6. Système de distribution selon l'une quelconque des revendications 3 à 5, **caractérisé en ce qu'**au moins un point de connexion électrique (P1, P1') est disposé en aval d'au moins un des appareillages électriques (9, 9') de sorte à injecter le deuxième signal électrique (S2) en aval dudit au moins un des appareillages électriques (9, 9').

7. Système de distribution selon la revendication 6, **caractérisé en ce que** le dispositif générateur de signal secondaire (2) comprend un injecteur de signal centralisé aval (10) étant relié en aval des sorties (14) des appareillages électriques (9) du sous-ensemble (E1) ou de l'ensemble des appareillages électriques (9, 9') au niveau d'un ensemble de points de connexion électriques (P1, P1') de sorte à injecter de manière centralisée le deuxième signal électrique (S2) en aval du sous-ensemble (E1) d'appareillages électriques (9) ou en aval de l'ensemble des appareillages électriques (9, 9').

8. Système de distribution selon la revendication 7, **caractérisé en ce que** le générateur de signal centralisé aval (10) comprend au moins un premier dispositif d'impédance de blocage du premier signal électrique (3) et/ou au moins un deuxième dispositif d'impédance de blocage du premier signal électrique et/ou du deuxième signal électrique (4).

9. Système de distribution selon la revendication 6, **caractérisé en ce que** le dispositif générateur de signal secondaire (2) comprend au moins un générateur de signal spécifique relié en aval d'au moins une sortie (14, 14') d'un des appareillages électriques (9, 9') de l'ensemble de sorte à injecter le deuxième signal électrique (S2) en aval dudit un des appareillages électriques (9, 9') de l'ensemble.

10. Système de distribution selon la revendication 9, **caractérisé en ce que** le dispositif générateur de signal secondaire (2) comprend un ensemble de générateurs de signal spécifiques associé à chaque appareillage électrique (9) d'au moins un sous-ensemble (E1) d'appareillages électriques (9) et chaque générateur de signal spécifique étant relié respectivement en aval d'une sortie (14) d'appareillages électriques (9) du sous-ensemble (E1) de sorte à injecter le deuxième signal électrique (S2) de manière individualisée en aval de chaque appareillage électrique (9) du sous-ensemble (E1).

11. Système de distribution selon l'une quelconque des revendications 3 à 10, **caractérisé en ce qu'**au moins un point de connexion électrique (P2, P2') est disposé en amont d'au moins un des appareillages électriques (9, 9') de sorte à injecter le deuxième signal électrique (S2) en amont dudit au moins un des appareillages électriques (9, 9').

12. Système de distribution selon la revendication 11, **caractérisé en ce que** le dispositif générateur de signal secondaire (2) comprend un injecteur de signal centralisé amont (11) étant relié en amont de l'entrée (13, 13') de chaque appareillage électrique (9, 9') de l'ensemble au niveau d'un ensemble de points de connexion électriques (P2, P2') de sorte à injecter le deuxième signal électrique (S2) dans l'ensemble d'appareillages électriques (9, 9').

13. Système de distribution selon la revendication 12, **caractérisé en ce que** l'injecteur de signal centralisé amont (11) comprend au moins un premier dispositif d'impédance de blocage du premier signal électrique (3) et/ou au moins un deuxième dispositif d'impédance de blocage du premier signal électrique et/ou du deuxième signal électrique (4).

14. Système de distribution selon l'une quelconque des revendications 3 à 13, **caractérisé en ce que** l'ensemble d'appareillages électriques (9, 9') comprend au moins un appareillage électrique (9') de tête et au moins une pluralité d'appareillages électriques (9) divisionnaires, la sortie (14') de l'appareillage électrique (9) de tête étant raccordée électriquement aux entrées (13) de la pluralité d'appareillages électriques divisionnaires (9') par des moyens de conduction électrique de préférence une barre de connexion (15).

15. Système de distribution selon les revendications 6, 11 et 14, **caractérisé en ce que** le dispositif générateur de signal secondaire (2) comprend un injecteur de signal centralisé aval et amont (10') étant relié en aval des sorties (14) des appareillages électriques (9) du sous-ensemble (E1) au niveau d'un ensemble de points de connexion électriques (P1), de sorte à injecter de manière centralisée le deuxième signal électrique (S2) en aval du sous-ensemble (E1) d'appareillages électriques (9) divisionnaires et étant relié en étant en amont de l'entrée (13') de l'appareillage électrique (9') de tête au niveau d'au moins un point de connexion électrique (P2), de sorte à injecter le deuxième signal électrique (S2) dans l'appareillage électrique (9') de tête.

16. Système de distribution selon l'une quelconque des revendications 3 à 15, **caractérisé en ce que** l'infrastructure de distribution électrique (1) comprend en outre un tableau électrique contenant le dispositif de distribution électrique (8) et le dispositif générateur de signal secondaire (2).

17. Système de distribution selon l'une quelconque des revendications 3 à 16, **caractérisé en ce que** le dispositif générateur de signal secondaire (2) est relié électriquement au réseau électrique primaire (R) ou à la source d'alimentation électrique primaire en amont du dispositif de distribution électrique (8) pour alimenter le dispositif générateur de signal secondaire (2).

18. Système de distribution selon l'une quelconque des revendications 1 à 17, **caractérisé en ce que** le dispositif générateur de signal secondaire (2) est configuré pour générer ledit au moins un deuxième signal électrique (S2) dit secondaire étant un signal de communication de données.

19. Système de distribution selon l'une quelconque des revendications 1 à 18, **caractérisé en ce que** le dispositif générateur de signal secondaire (2) est configuré d'une part pour générer ledit au moins un deuxième signal électrique (S2) dit secondaire étant un signal de diagnostic de ligne.

20. Système de distribution selon la revendication 19, **caractérisé en ce qu'**il comprend en outre au moins un dispositif de signature électrique (12) configuré pour former un repère dans l'installation électrique (I) et/ou dans l'infrastructure de distribution électrique (1).
